# EUROPÄISCHE PATENTSCHRIFT

(11) **EP 0 278 308 B1**
(45) Veröffentlichungstag und Bekanntmachung des Hinweises auf die Patenterteilung: **02.11.1994**
(21) Anmeldenummer: 88101058.1
(22) Anmeldetag: 26.01.1988
(51) Int. Cl.: B65G 49/04, B65G 65/00

(54) **Anordnung zur Beschickung von Traggestellen in Anlagen zum chemischen Behandeln in Bädern, insbesondere zum Galvanisieren von plattenförmigen Gegenständen**
Arrangement for loading racks in chemical-bath treatment installations, particularly for electroplating plate-like work pieces
Dispositif de mise en place des supports pour pièces dans les installations de traitement chimique en particulier dans l'électroplacage des pièces en forme de plaques

(30) Priorität: 06.02.1987 DE 3703542
(43) Veröffentlichungstag der Anmeldung: 17.08.1988
(73) Patentinhaber: ATOTECH Deutschland GmbH, 10553 Berlin (DE)
(72) Erfinder: Haase, Peter, D-8501 Feucht (DE); Kosikowski, Thomas, D-8500 Nürnberg (DE); Steger, Horst, D-8503 Altdorf (DE)
(74) Vertreter: Effert, Udo, Dipl.-Ing.

(56) Entgegenhaltungen:
- DE-A- 3 419 476
- DE-A- 3 603 062
- DE-B- 1 011 249
- FR-A- 2 186 977
- US-A- 4 004 699

## Beschreibung

Die Erfindung betrifft eine Anordnung zur Beschickung von Traggestellen zum chemischen Behandeln von plattenförmigen Gegenständen in Bädern.

Zur Beschickung von Galvanisieranlagen ist es bekannt, die plattenförmigen Teile von Hand an den Traggestellen zu befestigen, mit denen sie in der Galvanisieranlage in das jeweilige Bad getaucht werden. Nach erfolgter Galvanisierung müssen die plattenförmigen Teile ebenfalls von Hand von dem Traggestell abgenommen und abgelegt werden. Handarbeit ist sehr kostenaufwendig. Das Arbeiten in chemischen Anlagen, z.B. in Galvanisieranlagen, unterliegt außerdem relativ strengen Schutzbestimmungen. Dies gilt insbesondere dann, wenn wie bisher die plattenförmigen Teile nach der Galvanisierung, wenn sie also noch teilweise mit der Badflüssigkeit benetzt sind, von Hand abgenommen werden müssen. Die chemisch zu behandelnden plattenförmigen Gegenstände können verschiedener Art sein. Insbesondere ist dabei an zu galvanisierende Leiterplatten für den Einsatz in elektronischen Geräten gedacht.

In FR-A 2,186,977 wird ein Saugtellerkran beschrieben, bei dem an einer Laufkatze an Seilen hängende Saugteller und Traversen installiert sind. Diese Anordnung ist aufwendig. Die Bestückung von Gestellen zur Behandlung plattenförmiger Teile ist umständlich, da die Teile nacheinander in den Gestellen befestigt werden.

In DE-AS 10 11 249 werden ein Verfahren und eine Vorrichtung zum Beladen und Entladen von Beizgestellen mit Blechen oder Platten beschrieben, wobei die Be- und Entladevorrichtung ein kammartig ausgebildetes Kastenteil aufweisen.

Beide Anordnungen arbeiten nicht vollständig automatisch und erfordern daher zusätzlich manuelle Handhabungen, so daß deren Arbeitsweise aufwendig ist.

In der DE-OS 36 03 062 wird eine Vorrichtung zum Halten von Leiterplatten mit einem Traggestell und speziell ausgeführten Klemmanordnungen zum Festhalten der Leiterplatten in den Traggestellen beschrieben. Diese Klemmanordnungen sind schwenkbar und erlauben daher eine schnelle Befestigung der Leiterplatten in den Traggestellen. Das Einbringen der Leiterplatten in die Traggestelle kann somit automatisch erfolgen. Jedoch wird lediglich der Einsatz von Industrierobotern angegeben, die jedoch relativ langsam arbeiten und aufwendig sind, da die Zuführung der Leiterplatten nacheinander erfolgt.

Der vorliegenden Erfindung liegt von daher die Aufgabe zugrunde, die Nachteile des Standes der Technik zu vermeiden und eine geeignete Anordnung zur Beschickung von Traggestellen zur chemischen Behandlung von plattenförmigen Gegenständen zu finden. Die Aufgabe besteht daher darin, das Beschikken (hierunter wird stets auch die Abnahme der chemisch behandelten plattenförmigen Teile verstanden) der Traggestelle der Anlage mit den plattenförmigen Teilen ohne die Verwendung üblicher Industrieroboter mit einer kostengünstigen Konstruktion so zu automatisieren, daß sie zeitsparend erfolgt, einfach zu bedienen, leicht zu warten und zu reparieren ist.
daß die plattenförmigen Teile von Hand auf diese angebracht, daran befestigt und umgekehrt von Hand wieder abgenommen werden konnten. Hierzu waren die Traggestelle mit Schraubklemmen versehen, die nach Einbringen der plattenförmigen Teile von Hand angezogen, bzw.nach dem Galvanisieren von Hand gelöst werden mußten. Demgegenüber besteht die Aufgabe, eine solche Anordnung zu schaffen, die mit einem geringen zusätzlichen Platzbedarf, d.h. in kompakter Bauweise und ferner mit einem relativ geringen, zusätzlichen apparatemäßigen Aufwand eine schnelle und selbsttätige Beschickung der Traggestelle ermöglicht.

Die Lösung dieser Aufgabe wird, ausgehend vom Oberbegriff des Anspruches 1, zunächst in den Merkmalen des Kennzeichens des Anspruches 1 gesehen. Die Beladestation und die Entladestation sind jeweils als Baueinheit für sich herstellbar und unmittelbar neben einer Anlage oder in deren Nähe dort plazierbar, wo aufgrund der jeweiligen örtlichen Platzverhältnisse es räumlich am günstigsten ist. Es muß ein gesonderter Abnahmestapel mit den zu behandelnden plattenförmigen Gegenständen und ein gesonderter Ablagestapel für die behandelten plattenförmigen Gegenstände vorgesehen sein. Für das Anbringen (oder Abnehmen) der plattenförmigen Gegenstände an die Traggestelle, bzw. von den Traggestellen bestehen die beiden genannten alternativen Möglichkeiten a und b. Die weiteren Darlegungen, einschließlich der Ausführungsbeispiele, zeigen hierzu mehrere Ausführungen. So können z.B. zur Möglichkeit a mittels eines Warenträgers die Traggestelle zur Beladestation gebracht, dort mit den bereits in vertikaler Lage befindlichen plattenförmigen Gegenständen versehen und anschließend zur entsprechenden Stelle der Anlage gebracht werden. Die andere, eine bevorzugte Ausführungsform der Erfindung darstellende Alternative b ist die Zwischenschaltung einer gesonderten Beschickungseinrichtung an der Beladestation zwischen einer Vereinzelungsvorrichtung einerseits und den Traggestellen andererseits. In beiden vorgenannten Alternativen ist der für die Baladestation erforderliche zusätzliche Platzbedarf sehr gering. Vorstehende Ausführungen gelten sinngemäß für die Ablage der behandelten plattenförmigen Gegenstände mittels siner Entladestation. Sowohl die zu behandelnden, als auch die behandelten plattenförmigen Gegenstände sind in den bereits erwähnten Abnahmastapeln, bzw. Ablagestapeln lagerbar, von denen bzw. zu denen hin sie leicht ab- bzw. antransportiert werden können. Das Bewegen der plattenförmigen Gegenstände in die bzw. aus der vertikalen Lage, die für das chemische Behandeln, insbesondere Galvanisieren notwendig ist, ist gemäß der Erfindung maschinell und schnell durchführbar. Eine solche Anordnung kann in ihrer Gesamtheit und insbesondere im zeitlichen Ablauf mittels entsprechender Programme durch einen Computer gesteuert werden.

Die Kennzeichnenden Merkmale des Anspruches 1 beinhalten unter anderem eine Schwenkvorrichtung, die es ermöglicht mehrere, z.B. drei plattenförmige Gegenstände, die aneinander stoßen, gleichzeitig zu verschwenken und danach den Traggestellen, bzw. der Beschickungseinrichtung zuzuführen.

Die Merkmale des Anspruches 4 betreffen eine Schwenkeinrichtung, mit der nur ein plattenförmiger Gegenstand in die vertikale Lage verschwenkt und von dort her dem jeweiligen Traggestell, bzw. der Beschickungseinrichtung zugeführt wird.

Anspruch 7 beinhaltet die Ausgestaltung der gesonderten Beschickungseinrichtung zwecks Transport der plattenförmigen Gegenstände von der Be-, bzw. Entladestation zu den Traggestellen, bzw. umgekehrt. Eine solche Anordnung ist besonders raum- und kostensparend.

Die Erfindung befaßt sich weiter mit Mitteln zur Arretierung der Lage der Traggastelle (Ansprüche 11 bis 15), sowie mit einer automatischen Betätigung, d. h. Öffnen und Wiederschließen von Drehstäben an Traggestellen (Ansprüche 16 bis 21).

Weitere Vorteile und Merkmale der Erfindung sind den weiteren Unterensprüchen, sowie der nachstehenden Beschreibung und der zugehörigen Zeichnung von erfindungsgemäßen Ausführungsmöglichkeiten zu entnehmen. In der Zeichnung zeigt:
- Fig. 1:: schematisch die Darstellung der Anordnung nach der Erfindung in der Draufsicht,
- Fig. 2:: eine Teilansicht gemäß den Pfeilen II in Fig. 1,
- Fig. 3:: ebenfalls im wesentlichen schematisch und in der Stirnansicht eine weitere Möglichkeit einer Anordnung nach der Erfindung,
- Fig. 4:: in einem gegenüber den Fig. 1 bis 3 vergrößerten Maßstab (dies gilt auch für die Fig. 5 bis 9) eine Ausführungsform einer Be- bzw. Entladestation nach der Erfindung in der Seitenansicht,
- Fig. 5:: die zu Fig. 4 gehörende Draufsicht,
- Fig. 6, 7:: eine weitere Ausführungsform einer Be- bzw. Entladestation nach der Erfindung in Seitenansicht bzw. Draufsicht,
- Fig. 8, 9:: in einer Frontansicht zwei Ausführungsmöglichkeiten von Traggestellen, die nach der Erfindung beschickt sind,
- Fig.10:: eine weitere Ausführungsmöglichkeit einer Anordnung nach der Erfindung in der Draufsicht,
- Fig. 10a:: einen Teil der Fig. 10 nach Verschwenkung um 90°,
- Fig. 11:: eine Ansicht ähnlich Fig. 2 von einer weiteren Ausgestaltung der Erfindung,
- Fig. 12:: ein Detail aus Fig. 11 in der Seitanansicht, jedoch im vergrößerten Maßstab,
- Fig. 13:: eine Draufsicht auf Fig. 12,
- Fig. 14:: eine perspektivische Ansicht dieses Details aus Fig. 11, jedoch mit einer anderen Ausführung der Betätigung des Klinkenhebels,
- Fig. 15:: die zu Fig. 11 bis 14 gehörige Steuerung,
- Fig. 16:: in der Draufsicht bzw. horizontalen Schnitt eine Anordnung zur Betätigung von Drehstäben eines Traggestelles in der Halte- bzw. Klemmlage,
- Fig. 16a:: die Anordnung nach Fig. 16 in der Offenlage eines der Drehstabhalterungen,
- Fig. 17:: in der Draufsicht eins Beschickungseinrichtung mit Betätigungen und Anordnungen gemäß Fig. 16, 16a.

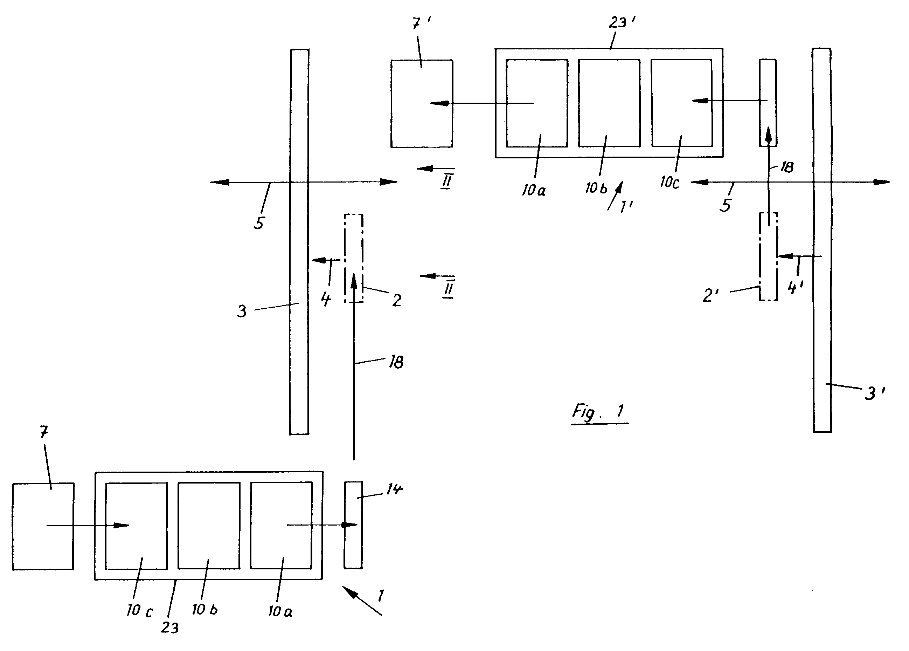

Die Fig. 1 zeigt eine bevorzugte Ausführung des Prinzipes einer Be- bzw. Entladestation 1 nach der Erfindung schematisch in der Draufsicht. Von einem Entnahmestapel 7 her werden die dort horizontal gelagerten plattenförmigen Gegenstände einer mit 23 bezifferten Vereinzelungsvorrichtung zugeführt und in eine vertikale Position gebracht, aus der sie gemäß dem Pfeil 18 mittels einer Transportund Beschickungseinrichtung 14 in die strichpunktiert dargestellte Lage 2 gegenüber den Traggestellen 19; 34 gelangen, die jeweils an einem Warenträger 3 hängen. Dabei können in Längsrichtung des Warenträgers 3 nebeneinander mehrere Traggestelle zur Aufnahme einer entsprechenden Anzahl plattenförmiger Gegenstände hängen. Die plattenförmigen Gegenstände werden von dieser Transport- und Beschickungseinrichtung entweder in Richtung des Pfeiles 4 an die Traggestelle angebracht, oder in diese eingeschoben (siehe spätere Ausführungen). Danach kann der Warenträger 3 in Richtung des Doppelpfeiles 5 in die jeweils gewünschte Position innerhalb der links oder rechts von der Darstellung der Fig. 1 befindlichen chemischen Behandlungsanlage, insbesondere Galvanisieranlage verfahren werden. Ein weiterer Vorteil besteht darin, daß die Warenträger mit den Traggestellen beim Beladen bzw. Entladen mit den bzw. der plattenförmigen Gegenstände ihre normale senkrechte Arbeitsposition beibehalten können. Nach dem Behandeln der plattenförmigen Gegenstände in dem Bad, bzw. den Bädern wird der Warenträger 3' mit den plattenförmigen Gegenständen in die Position in Fig. 1 rechts gebracht, die plattenförmigen Gegenstände werden von einer analog ausgebildeten Entnahme- und Transporteinrichtung zunächst durch Schieben oder gemäß Pfeil 4' in die Position 2' gebracht und von dort gemäß den Pfeilen über eine in ihrem Aufbau der Vereinzelungsvorrichtung 23 entsprechenden Vorrichtung 23; die aber die Teile hier in umgekehrter Richtung bewegt, zum Ablegestapel 7' transportiert, wobei im Verlauf dieser Bewegung die plattenförmigen Gegenstände aus der vertikalen in die horizontale Lage zurückgeschwenkt werden. Wenn es auch eine bevorzugte Ausführungsform der Erfindung ist, den horizontalen plattenförmigen Gegenständen automatisch gesteuert eine vertikale Lage zu geben, so könnten sie auch von Anfang an schon eine vertikale Position haben, z.B. durch Lagerung in einer Kassette mit senkrechten Halterungen oder Führungen für die plattenförmigen Gegenstände.

Das Verfahren der Transporteinrichtungen, die sowohl der Beschickung bzw. Entnahme dienen können, kann mit Hilfe nicht gesondert dargestellter schlittenartiger Führungen erfolgen. Detaillierte Ausführungsmöglichkeiten werden später erläutert. Die jeweilige Position der Greifer, bzw. entsprechende Beschickungsvorrichtungen in Relation zur Längsrichtung des Warenträgers wird bevorzugt durch Servomotoren definiert, deren Umdrehungszahl genau die jeweilige Position angibt, so daß die Umdrehungszahlen in der zugehörigen automatischen Steuerung einprogrammiert werden können.

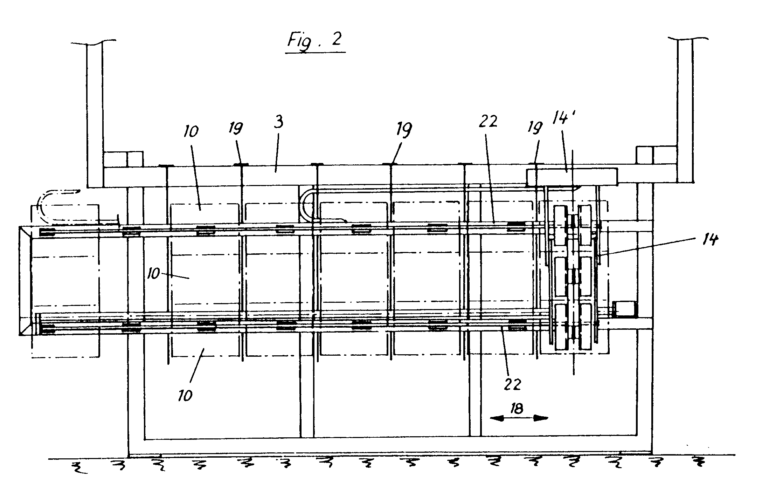

Fig. 2 zeigt eine Frontalansicht auf einen Warenträger 3 mit daran hängenden Traggestellen 19 und schematisch an den Traggestellen angedeuteten mehreren Sätzen von jeweils drei übereinander befindlichen plattenförmigen Gegenständen 10. Die Traggestelle 19 sind nur durch einen dickeren Strich schematisch angedeutet. Hinsichtlich Details der Traggestelle und der Anbringung, bzw. Abnahme der plattenförmigen Gegenstände wird ebenfalls auf die späteren Ausführungen verwiesen.

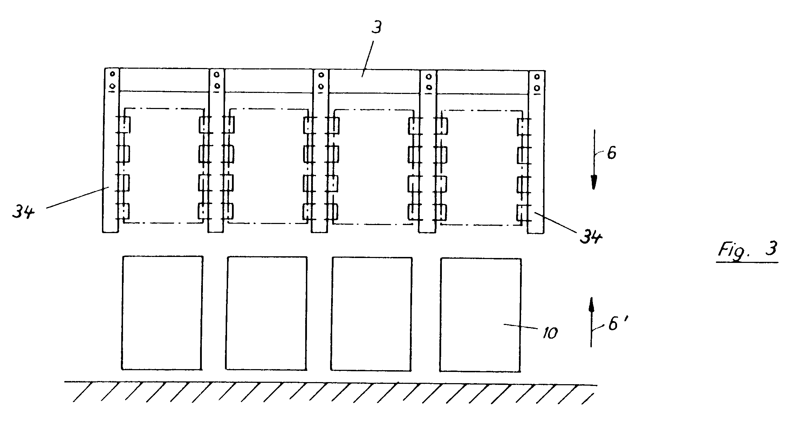

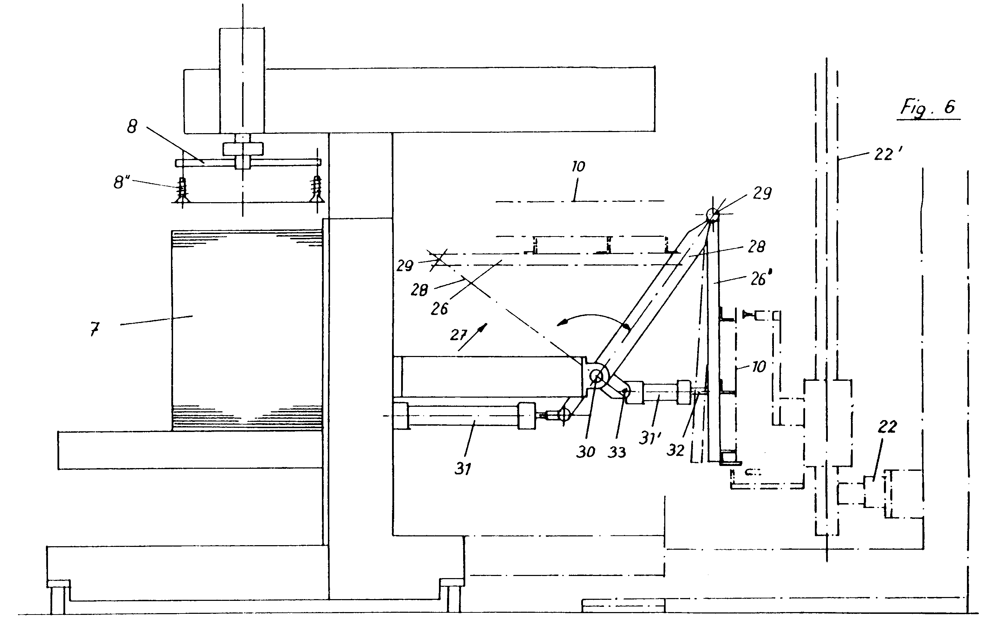

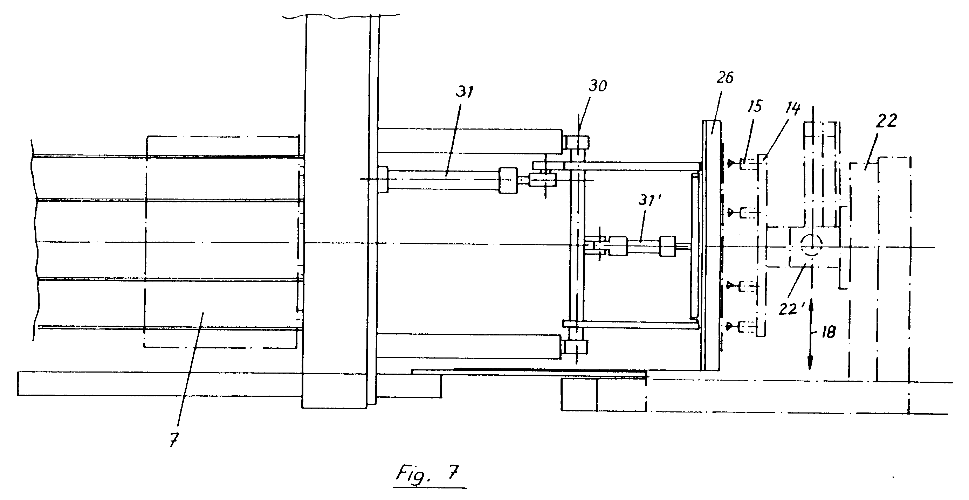

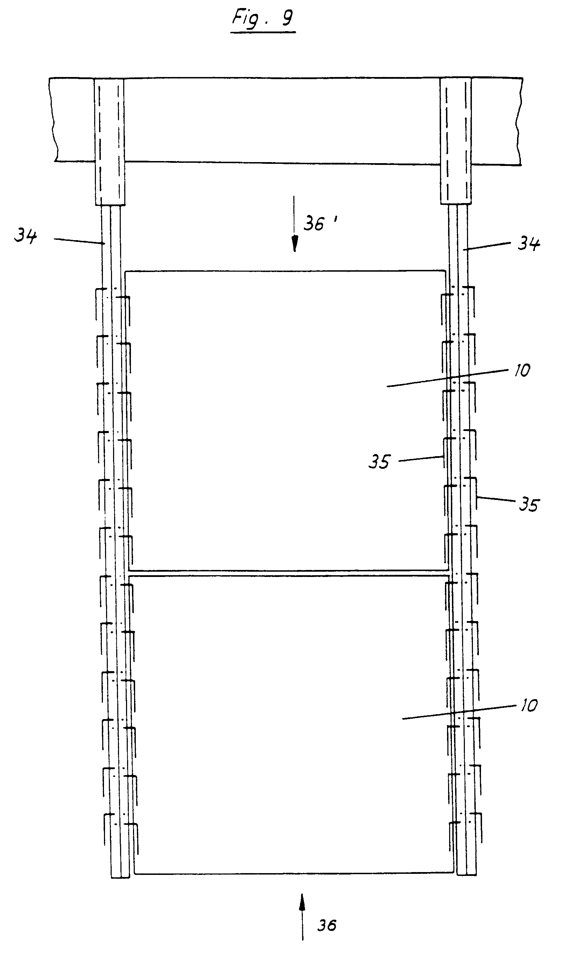

Fig. 3 zeigt eine Variante der Erfindung, und zwar in einer Ansicht auf einen Warenträger 3 mit Traggestellen 34, die von der chemischen Behandlungsanlage her in Richtung der Doppelpfeile 5 gemäß Fig. 1 in eine Position oberhalb der plattenförmigen Gegenstände 10 transportiert worden sind. Hierzu kann eine Wand oder Reihe von plattenförmigen Gegenständen 10 durch Hochkippen geschaffen werden. Das Einschieben der Gegenstände in die Traggestelle, bzw. das Überschieben der Traggestelle über die plattenförmigen Gegenstände 10 ist aber nur mit den für dieses Einschieben ausgebildeten Traggestellen 34 möglich, z.B. gemäß dem noch näher zu erläuternden Ausführungsbeispiel der Fig. 9. Erwähnt sei, daß ferner ein Traggestell nach Fig. 9 nur mit einer Einrichtung, z.B. nach Fig. 6 und 7, beschickbar ist, die dem Greifer nur jeweils einen plattenförmigen Gegenstand übergibt. Entweder kann der jeweilige Warenträger mit den Traggestellen in Pfeilrichtung 6 nach unten über die plattenförmigen Gegenstände 10 geschoben werden, wobei Klemmfedern 35 die Gegenstände halten. Oder aber es werden die plattenförmigen Gegenstände mittels einer nicht im einzelnen dargestellten Vorrichtung in Pfeilrichtung 6' nach oben in eine Klemmhalterung oder dergleichen der Traggestelle 34 geschoben. Danach werden die Warenträger in Pfeilrichtung 5 zur chemischen Behandlungsstation der Anlage gefahren. Die Abnahme der behandelten plattenförmigen Gegenstände von den Traggestellen erfolgt analog der vorstehenden Schilderung, nur in umgekehrter Richtung. Somit wird eine gesonderte Transport- und Beschickungseinrichtung gemäß dem Ausführungsbeispiel der Fig. 1 vermieden.

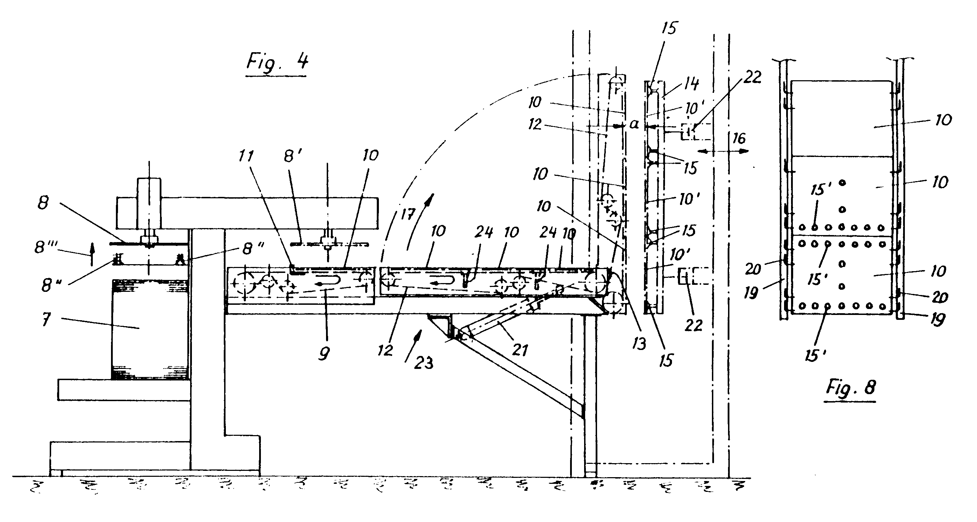

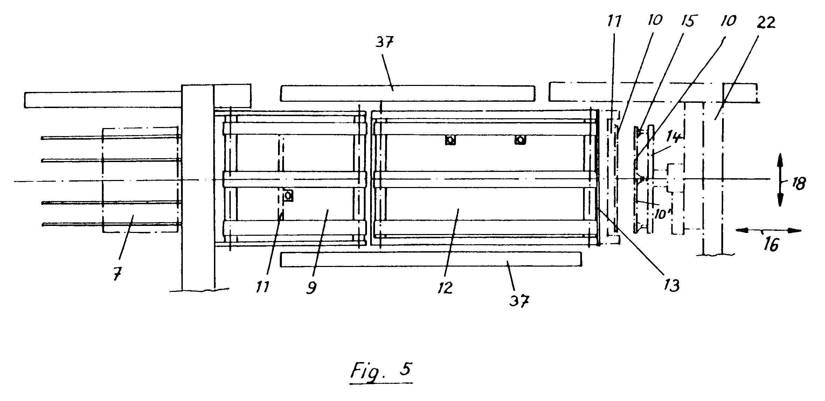

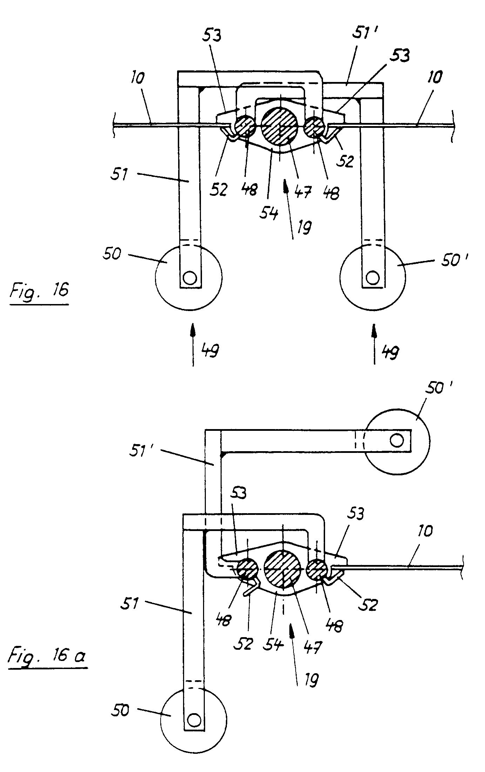

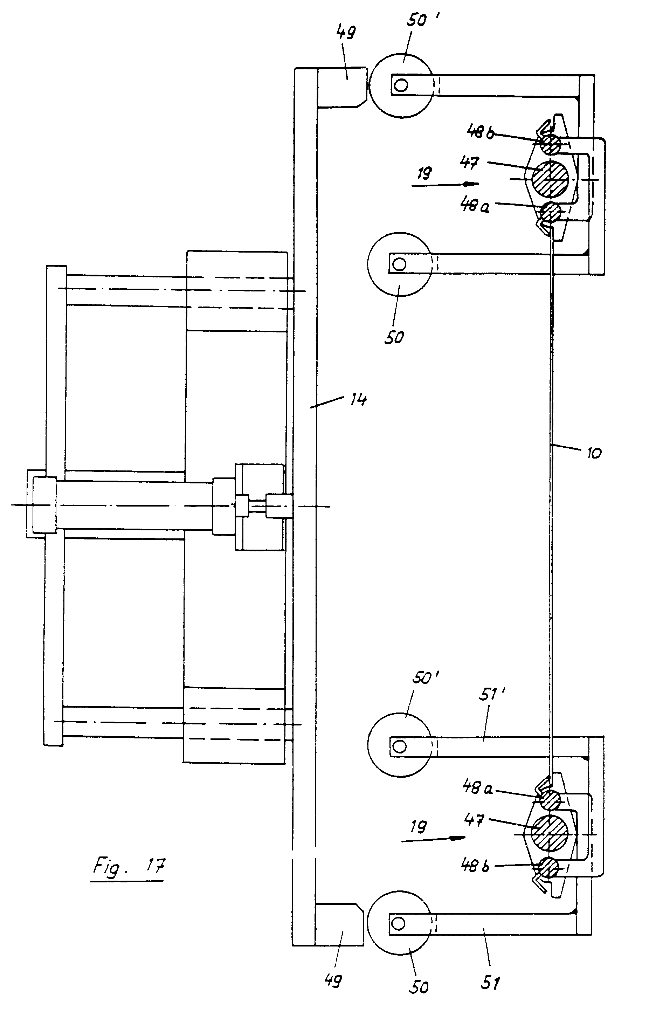

Das Ausführungsbeispiel der Fig. 4 und 5 zeigt eine Beladestation mit einem Stapel 7 von plattenförmigen Teilen. Dies sei im vorliegenden Ausführungsbeispiel ein Abnahmestapel, von dem die einzelnen plattenförmigen Gegenstände, bevorzugt Leiterplatten für den Einsatz in elektronischen Geräten, von einer Hebevorrichtung 8 in Richtung des Pfeiles 8''' gehoben werden. Dies geschieht bevorzugt mittels Saugnäpfen 8''. Die angehobenen plattenförmigen Gegenstände werden dann in der Lage 8' der Hebevorrichtung (sie kann in diese Lage verschoben oder verschwenkt werden) auf einem ersten Transportband 9 abgelegt, das in der angegebenen Pfeilrichtung umläuft. Von hier gelangen die plattenförmigen Gegenstände 10 auf ein zweites Transportband 12, das mit dem ersten Transportband 9 fluchtet und im vorliegenden Ausführungsbeispiel drei dieser plattenförmigen Gegenstände hintereinander liegend aufnehmen kann, wobei der Weitertransport über das Band 12 hinaus durch einen Anschlag 13 gestoppt wird. Danach wird das zweite Transportband mit den plattenförmigen Gegenständen 10 in Pfeilrichtung 17 in die strichpunktiert dargestellte, senkrechte Lage gebracht. Das zweite Transporthand 12 ist ebenfalls mit Mitteln, wie pneumatischen Saugnäpfen oder seitlichen Klemmhalterungen 24, versehen, um die plattenförmigen Gegenstände 10 während des Schwenkvorganges bis zur Übergabe an den zu erläuternden Greifer 14 zu halten. In dieser vertikalen Position liegt den plattenförmigen Gegenständen 10 ein als Beschickungseinrichtung dienender Greifer 14 gegenüber, der mit Saugnäpfen 15 zum Erfassen der plattenförmigen Gegenstände versehen ist. Hierzu wird der Greifer 14 in Richtung des Doppelpfeiles 16 um den Abstand a nach links gefahren, bis die Saugnäpfe 15 die Platten 10 erfassen. Das Transportband 12, bzw. der dazugehörige Kipptisch (dies gilt auch für den Tisch 26, 26' in Fig. 6) können nach der Abgabe der plattenförmigen Gegenstände an den Greifer in ihrem unteren Bereich vom Greifer weggeschwenkt werden, um eine entsprechende Distanz zum Greifer zu schaffen. Anschließend wird der Greifer wieder um den Abstand a in Richtung des Doppelpfeiles 16 nach rechts zurückgefahren. Jetzt nehmen die plattenförmigen Gegenstände die Lage 10' ein. Der Greifer 14 wird mittels einer Führung 22 entlang des Warenträgers 3 geführt. Er kann im oberen Ende noch Steuer- oder Betätigungsmittel 14' besitzen, um die Drehstabgestelle 19 zu öffnen. Hierauf wird anhand der Fig. 16, 17 noch näher eingegangen.

Die Draufsicht gemäß Fig. 5 zeigt, daß nach dem Abnehmen der plattenförmigen Gegenstände durch den Greifer und Verschieben in Pfeilrichtung 16 nach rechts der Greifer 14 in Pfeilrichtung 18 mit Hilfe der oben bereits erwähnten Schlittenführung 22 entlang dem Warenträger 3 in Pfeilrichtung 18 (siehe auch Fig. 1, 2) soweit verschoben wird, bis er dem zu beschickenden Traggestell des Warenträgers gegenübersteht. Das Beispiel eines solchen Traggestellpaares ist in Fig. 8 gezeigt. Es besteht aus zwei Traggestellen 19 mit drehbaren Klemmstäben und Haltefedern 20. Der Greifer bewegt die plattenförmigen Gegenstände 10 in einer Richtung, die senkrecht zur Zeichenebene der Fig. 8 verläuft, wobei die Angriffsstellen der Saugnäpfe 15 durch entsprechende Kreise 15' angedeutet sind. Sobald der Greifer die plattenförmigen Gegenstände 10 in Halteöffnungen, über vorspringende Stifte oder dergleichen der Traggestellstäbe 19 gehängt, bzw. in die richtige Position gebracht hat, drehen sich die Klemmstäbe so um ihre Achse, daß die Haltefedern 20 die plattenförmigen Gegenstände 10 in dieser Lage festhalten. Danach wird in üblicher Weise die chemische Behandlung der in vertikaler Lage an den Traggestellen hängenden plattenförmigen Gegenstände durchgeführt. Es können seitliche Führungen 37 vorgesehen sein, die sich außerhalb des Schwenkbereiches, bzw. seitlich der Transportbänder 9, 12 befinden und ein ungewolltes seitliches Verlagern der plattenförmigen Gegenstände 10 verhindern.

Nach erfolgter chemischer Behandlung läuft dann in einer Anordnung, die in ihrem Aufbau der vorstehend erläuterten Anordnung entspricht, der gesamte Vorgang in umgekehrter Richtung ab. Dies war bereits in Fig. 1 durch die Ziffern 2', 3', 4', 1' bis zum Ablagestapel 7' angedeutet, die in ihrem Aufbau und Funktion dem in Fig. 1 dargestellten Arbeitsgang vom Abnahmestapel 7 über 1, 2, 4 entsprechen. Es steht also eine komplette Be- und Entladestation sowohl für das Beladen, als auch für das Entladen zur Verfügung. Es liegt aber auch im Bereich der Erfindung, sowohl das Beladen als auch das Entladen mit einer gemeinsamen Station vorzunehmen, sofern die Taktzeiten der Anlage entsprechend lang sind. Für das Entladen werden nach Abnahme von den Traggestellen die plattenförmigen Gegenstände wieder in die Horizontale geschwenkt und in dieser Lage auf den Ablagestapel 7' gelegt. Dabei ist es von Vorteil, daß die in Fig. 1 links unten schematisch mit 10a, 10b und 10c angedeuteten plattenförmigen Gegenstände in der Reihenfolge, in der sie vom Entnahmestapel 7 abgenommen werden, wieder auf dem Ablagestapel 7' gestapelt werden. Dies gilt natürlich nicht nur für die drei gezeichneten plattenförmigen Gegenstände, sondern für sämtliche plattenförmigen Gegenstände des gesamten Stapels.

Soweit die Bewegungen der vorgenannten Transportmittel usw. nicht elektrisch oder mechanisch erfolgen, empfiehlt sich der Einsatz pneumatischer Mittel, z.B. einen pneumatischen Zylinder 21 für die Schwenkvorrichtung 23 des zweiten Transportbandes 12 mit den plattenförmigen Gegenständen aus der waagerechten in die vertikale Lage und umgekehrt. Vom Prinzip her wäre zwar auch eine Hydraulik einsetzbar; doch besteht dabei die Gefahr, daß aus der Hydraulik austretende Öltropfen in die chemischen Behandlungsbäder, insbesondere galvanischen Bäder gelangen und diese verunreinigen.

Mögliche Ausführungen von Greifern und Traggestellen sind beispielsweise, ohne daß die Erfindung darauf beschränkt ist, der älteren Anmeldung DE-P 36 06 493.9-45 der Anmelderin zu entnehmen, auf deren Offenbarungsinhalt hiermit ausdrücklich Bezug genommen wird. Es sind auch Traggestelle in den verschiedenen Ausführungsmöglichkeiten der deutschen Patentanmeldung P 36 06 492 der Anmelderin verwendbar, wobei die plattenförmigen Gegenstände entweder in Längsrichtung der Traggestelle eingeschoben oder aber quer zu deren Ebene aufgebracht und daran gehalten werden können. Auf den Offenbarungsinhalt dieser Anmeldung wird ebenfalls Bezug genommen.

Das Ausführungsbeispiel der Fig. 6, 7 zeigt eine Vereinzelungsvorrichtung, die zugleich der Abnahme vom Stapel dient und Transportvorrichtung ist, wobei jeweils nur ein einzelner plattenförmiger Gegenstand dem Traggestell zugeführt wird. Es ist wieder ein Leiterplattenstapel 7 mit Hebevorrichtung 8 und pneumatischen Saugern 8'' vorgesehen. Die plattenförmigen Gegenstände 10 gelangen nach ihrem Hochheben und Bewegen nach rechts (siehe dazu auch Fig. 4) über einen Kipptisch 26, auf den sie von der Hebevorrichtung 8 abgelegt werden. Danach wird der Tisch mit Hilfe einer Schwenkvorrichtung 27 aus seiner bisherigen waagerechten Lage in die vertikale Position 26' verschwenkt. Zu diesem Zweck ist er bei 29 an einem Hebel 28 angelenkt, der um den Anlenkpunkt 30 von einer ersten Pneumatik 31 verschwenkt wird. Eine weitere Pneumatik 31' ist einerseits mit dem Tisch bei 32 verbunden und an ihrem anderen Ende bei 33 angelenkt. Mit Hilfe beider pneumatischer Betätigungen kann der Ablagetisch 26' genau die senkrechte Position gemäß Zeichnung einnehmen.

Auch in diesem Ausführungsbeispiel ist ein Greifer 14 mit Saugnäpfen 15 vorgesehen, der nach Übernahme des plattenförmigen Gegenstandes 10 in Pfeilrichtung 18 entlang des Warenträgers bewegt werden kann. Hierzu wird auf die vorhergehenden Ausführungen verwiesen. Die waagerechte Führung des Greifers 14 ist mit 22 und seine senkrechte Führung mit 22' beziffert.

Das Ausführungsbeispiel der Fig. 6, 7 kann analog, nur in umgekehrter Bewegungsrichtung der plattenförmigen Gegenstände, auch zur Abnahme nur eines plattenförmigen Gegenstandes 10 vom jeweiligen Traggestell des Warenträgers und Rückkippung in die horizontale Lage und schließlich Ablage auf einem Ablagestapel analog Ziff. 7' des vorhergehenden Ausführungsbeispieles eingesetzt werden.

Der Greifer 14 kann entweder den jeweiligen plattenförmigen Gegenstand auf Traggestelle aufbringen, die gleich oder ähnlich den Traggestellen gemäß Fig. 8 ausgebildet sind. Im vorliegenden Fall, in dem einzelne plattenförmige Gegenstände vom Greifer aufgenommen und an die Traggestelle weitergegeben werden, empfiehlt es sich jedoch, Traggestelle zu verwenden, die ein Einschieben der plattenförmigen Gegenstände gemäß Fig. 9 in Richtung des Pfeiles 36 ermöglichen, bzw. eine Abnahme, d. h. Herausschieben der behandelten plattenförmigen Gegenstände 10 in Richtung des Pfeiles 36'. Dazu sind Klemm- oder Haltefedern 35 vorgesehen. Hinter oder zwischen diese Federn werden die plattenförmigen Gegenstände 10 in Längsrichtung der Traggestellstäbe 34 geschoben. Das Beispiel einer solchen Greifervorrichtung ist der o.g. älteren Anmeldung DE-P 3 606 493.9-45 der Anmelderin zu entnehmen.

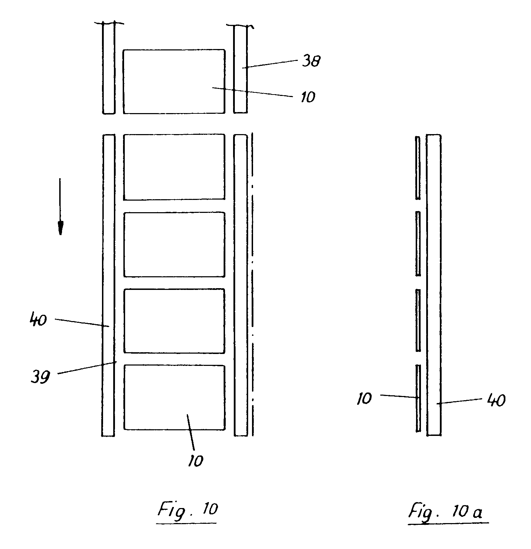

Fig. 10 zeigt vom Prinzip her und rein schematisch eine weitere Möglichkeit der Erfindung, die von einer Vereinzelungsvorrichtung 38 her kommenden plattenförmigen Gegenstände 10 auf einem Transportband 39 hintereinander anzuordnen. Entweder das Transportband selber oder ein die auf dem Transportband befindlichen plattenförmigen Gegenstände erfassender Rahmen 40 wird dann um 90° in die senkrechte Lage gemäß Fig. 10a verschwenkt. Die somit senkrecht stehenden plattenförmigen Gegenstände 10 können nach einer der erläuterten Möglichkeiten den jeweiligen Traggestellen zugeführt werden.

Soweit es nicht schon ausdrücklich erwähnt ist, gilt für alle Beschickungs- und Transporteinrichtungen, daß sie auch die plattenförmigen Gegenstände in umgekehrter Richtung von den Traggestellen zu einem jeweiligen Ablagestapel bringen.

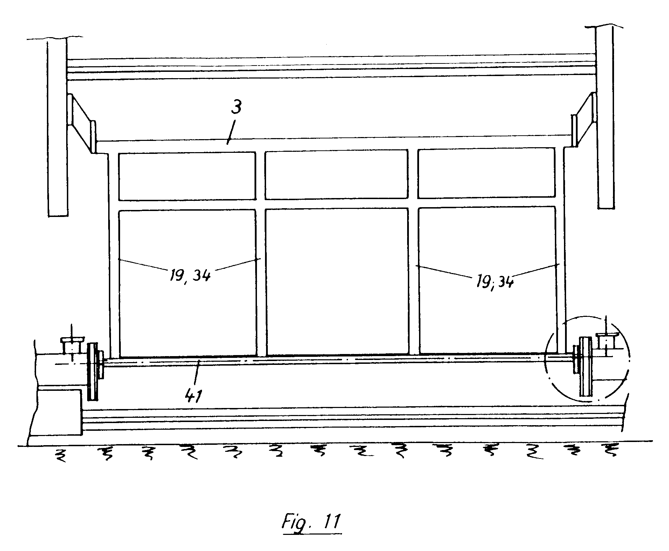

Fig. 11 zeigt in einer Ansicht, ähnlich Fig. 2, Traggestelle 19; 34, deren untere Enden durch eine Versteifungsstange 41 miteinander verbunden und dadurch zunächst in ihrer Ebene miteinander versteift sind. Hinzu kommt, daß die Stange 41 an ihren Enden Einkerbungen 42 aufweist, in die je ein klinkenähnlicher Hebel 43 eingreifen kann. Sobald diese Einklinkung erfolgt ist, arretiert der Klinkenhebel 43 die Versteifungsstange 41 nicht nur in ihrer Längsrichtung, sondern auch in einer Richtung quer zu der Ebene, die von den Traggestellen gebildet wird. Damit ist also sowohl in der Ebene der Traggestelle, als auch quer dazu jeweils eine Arretierung geschaffen, die nicht nur der Versteifung, sondern auch einer genauen Positionierung der Traggestelle in beiden vorgenannten Richtungen dient. Der letztgenannte Vorteil sichert die erforderliche Genauigkeit der Position der Traggestelle zur Beschickungs- oder Abnahmeeinrichtung, z. B. Greifer, für das Aufbringen, bzw. Abnehmen der plattenförmigen Gegenstände 10 auf die, bzw. von den Traggestellen. Die vorgenannte Versteifung der Traggestelle ist auch deswegen wichtig, weil man zwecks Reduzierung des chemisch nicht optimal zu behandelnden Randes der plattenförmigen Gegenstände die Halte- oder Klemmfedern 20, 35 nur relativ kurz machen will, dann aber die Gestelle quer zu ihrer Ebene praktisch nicht bewegen dürfen.

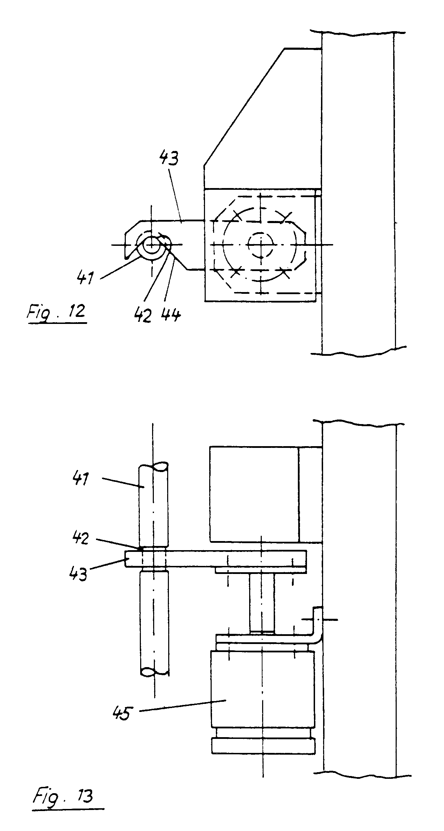

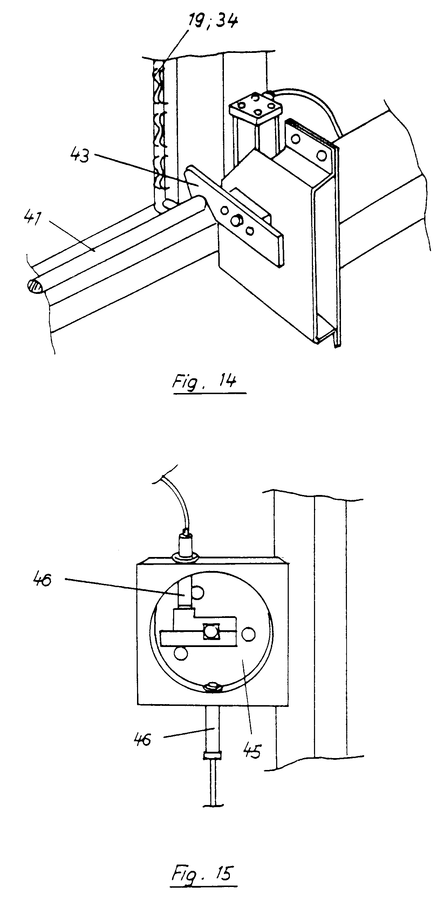

Einzelheiten ergeben sich aus den Fig. 12, 13 und 14, die den in Fig. 11 eingekreisten Bereich näher in einer Seitenansicht, Draufsicht und in einer perspektivischen Ansicht zeigen. Die Bewegung des mit einem Ausschnitt 44 versehenen Klinkenhebels 43 in die dargestellte Haltelage, bzw. aus dieser in die dazu um etwa 90° verschwenkte Freigabestellung wird mittels eines Drehzylinders 45 vorgenommen, dessen Endlagen durch Kontaktfühler 46 (s.Fig. 15) bestimmt sind; d.h. in diesen Endlagen wird über die vorgenannten Kontakte 46 abgeschaltet. Der Drehzylinder arbeitet bevorzugt pneumatisch.

Fig. 16 zeigt in einem horizontalen Schnitt ein Traggestell 19 mit einem Tragstab 47 und zwei Drehstäben 48. Sobald beim Beschickungsvorgang ein Stößel 49 des Greifers oder der Beschickungsvorrichtung (s.Fig.17) in der angegebenen Pfeilrichtung auf eines der Widerlager oder Rollen 50 bzw. 50' trifft, bewegt dies jeweils über Hebel 51 bzw. 51' den jeweiligen Drehstab 48 so, daß sich dieser um seine Längsachse verschwenkt. Damit wird die zugehörige Andruckfeder 52 von einem Widerlager 53 so weit abgehoben, daß die plattenförmigen Gegenstände 10 vom Greifer bzw. der Beschickungsvorrichtung gegen das Widerlager 53 gelegt werden können (Fig. 16a). Fährt der Greifer, bzw. die Beschickungseinrichtung wieder zurück, so nehmen die Teile unter der Wirkung nicht dargestellter Rückholfedern die Lage gemäß Fig. 16 ein, in der die plattenförmigen Gegenstände 10 zwischen den Federn 52 und den Widerlagern 53 fest gehalten sind. Die Widerlager 53 sind bevorzugt Teile von Trag- und Führungsplatten 54, die in Abständen voneinander angeordnet sind und zugleich Drehlager für die Drehstäbe 48 bilden.

Fig. 17 zeigt in der Draufsicht eine Beschickungsvorrichtung bzw. Greifer 14 mit zwei Stößeln 49, die bei ihrer Bewegung zu den Traggestellen hin von der jeweiligen Anordnung (bestehend aus einem Tragstab 47 und zwei Drehstäben 48) jeweils nur die beiden Drehstäbe verschwenken, die hier mit 48a bezeichnet sind, da die Stößel nur auf die jeweils zugehörigen Rollen 50 bzw. 50' treffen. Somit kann in dem Raum zwischen den beiden Drehstäben 48a ein plattenförmiger Gegenstand 10 eingebracht und, wie anhand der Fig. 16, 16a erläutert, festgeklemmt werden. Die zugehörigen Klemmittel sind in der Zeichnung nicht dargestellt. Auch ist der plattenförmige Gegenstand 10 nur über einen Teil seiner Länge angedeutet. Der jeweilige Stößel 49 betätigt also nur einen Drehstab einer Anordnung gemäß den Fig. 16, 16a. Die im vorstehend erläuterten Beispiel nicht betätigten weiteren Drehstäbe 48b werden vom jeweiligen Stößel 49 bei entsprechender Plazierung der Beschickungseinrichtung 14 betätigt, sobald sie zur Anklemmung von plattenförmigen Gegenständen benötigt werden. Der Vorteil dieser Anordnung besteht besonders darin, daß das Drehen der Drehstäbe 48, bzw. 48a und 48b nicht durch Ziehen, sondern durch eine Druckbetätigung in Richtung der Pfeile bzw. Stößel 49 erfolgen kann, wobei es zur Übertragung dieser Druckbewegung günstig ist, daß die Hebel 51 bzw. 51' wie dargestellt von der jeweiligen Betätigungsseite her gewissermaßen um die Traggestellanordnung herum zu dem auf der anderen Seite gelegenen Drehstab 48 geführt sind.

## Patentansprüche

1. Anordnung zur Beschickung von Traggestellen in Anlagen zum chemischen Behandeln, insbesondere Galvanisieren, von plattenförmigen Gegenständen in Bädern, wobei die plattenförmigen Gegenstände in den Traggestellen in vertikaler Lage gehalten sind und vor sowie nach dem Behandeln horizontal gelagert werden, gekennzeichnet durch eine Belade- und eine Entladestation (1, 1') mit je einer Vereinzelungsvorrichtung (8) zum Abnehmen und Auflegen einzelner plattenförmiger Gegenstände (10) von einem aus diesen gebildeten Stapel auf eine Vorrichtung zum Weitertransport der plattenförmigen Gegenstände bzw. von einer solchen Vorrichtung zurück auf einen Stapel (7, 7'), wobei die Vorrichtung zum Weitertransport zum einen ein erstes Transportband (9) zur Aufnahme der von der Vereinzelungsvorrichtung (8) abzulegenden plattenförmigen Gegenstände (10) umfaßt und zum anderen ein zweites Transportband (12) aufweist, das mit dem ersten wenigstens in der Höhe fluchtet und dessen Länge so bemessen ist, daß mehrere, z.B. drei, plattenförmige Gegenstände (10) hintereinander darauf Platz haben, und daß das zweite Transportband (12) zusammen mit den plattenförmigen Gegenständen (10) aus der Horizontalen in die Vertikale (bzw. in umgekehrter Richtung) verschwenkbar ausgebildet ist, und ferner:
a) mit Mitteln, um die sich in der Vertikalen befindenden plattenförmigen Gegenstände (10) an die Traggestelle (19, 34) zu übergeben bzw. von diesen abzunehmen; oder
b) mit Mitteln, um die sich in der Vertikalen befindenden plattenförmigen Gegenstände (10) an eine gesonderte Beschickungseinrichtung (14), die zugleich als Transporteinrichtung zum Bewegen der plattenförmigen Gegenstände von der Schwenkeinrichtung (23, 27) zum jeweiligen Traggestell (19, 34) ausgebildet ist, zu übergeben bzw. von dieser abzunehmen.

2. Anordnung nach Anspruch 1, gekennzeichnet durch eine Hebevorrichtung (8), welche die plattenförmigen Gegenstände (10) erfaßt, z.B. mittels Saugnäpfen (8''), vom Plattenstapel (7) abhebt und seitwärts zu der Schwenkvorrichtung (23, 27) transportiert, darauf ablegt, bzw. diese Maßnahme in umgekehrter Richtung vornimmt.

3. Anordnung nach Anspruch 1, dadurch gekennzeichnet, daß das zweite Transportband (12) Mittel, z.B. pneumatische Saugnäpfe (24), aufweist, welche die plattenförmigen Gegenstände während des Schwenkvorganges bis zur Übergabe an ein Traggestell oder eine Beschickungseinrichtung bzw. von der Abnahme hiervon bis zu Beendigung des Schwenkvorganges festhalten.

4. Anordnung nach Anspruch 1, gekennzeichnet durch einen Ablagetisch (26) zur Aufnahme eines der plattenförmigen Gegenstände (10) und eine den Ablagetisch aus der horizontalen in die vertikale Lage (bzw. in umgekehrter Richtung) verschwenkende Vorrichtung (27), wobei eine Hebevorrichtung (8) den jeweiligen plattenförmigen Gegenstand auf dem horizontalen Ablagetisch ablegt bzw. den behandelten plattenförmigen Gegenstand von diesem abhebt.

5. Anordnung nach Anspruch 4, dadurch gekennzeichnet, daß der Ablagetisch (26) an einen bevorzugt pneumatisch (31) verschwenkbaren Hebel (28) angelenkt (29) und im Abstand von dieser ersten Anlenkung (29) an einer weiteren, bevorzugt pneumatischen Betätigung (31') angelenkt und damit zur ersten Anlenkung (29) verschwenkbar ist und daß durch Steuerung der beiden vorgenannten Schwenkmittel (31, 31') die horizontale und die vertikale Lage des Ablagetisches (26) einstellbar sind.

6. Anordnung nach einem der Ansprüche 1 bis 5, dadurch gekennzeichnet, daß als gesonderte Beschickungseinrichtung Greifer (14) vorgesehen sind und daß die eine vertikale Lage einnehmenden plattenförmigen Gegenstände (10) von der Beladestation (1) durch horizontales Verlagern entweder des jeweiligen Greifers oder der plattenförmigen Gegenstände dem Greifer zugeführt bzw. umgekehrt von diesem abgenommen und der Entladestation zugeführt werden.

7. Anordnung nach einem der Ansprüche 1 bis 6, dadurch gekennzeichnet, daß die gesonderte Beschickungseinrichtung (14) in der bevorzugten Ausbildung als Transporteinrichtung schlittenartig mittels horizontal verlaufender Führungen (22) von der Beladestation (1) her entlang der am Warenträger (3) hängenden Traggestelle (19, 34) in die Beladeposition transportierbar ist, daß in dieser Position die plattenförmigen Gegenstände (10) von der Beschickungseinrichtung auf das Traggestell aufgebracht werden, und daß nach dem chemischen Behandeln die Transport- und Beschickungseinrichtung (14) die behandelten plattenförmigen Gegenstände von dem jeweiligen Traggestell abnimmt und entlang dem Warenträger (3) zur Entladestation (1') hinführt, von der die plattenförmigen Gegenstände in die horizontale Lage gebracht, z.B. auf einen Ablagestapel (7') gelegt werden.

8. Anordnung nach Anspruch 1, gekennzeichnet durch Mittel, welche die plattenförmigen Gegenstände (10) in einer senkrechten Lage halten, und durch eine Verfahrbarkeit des Warenträgers (3) mit daran hängenden Traggestellen (19, 34) in eine Lage oberhalb dieser Reihe von plattenförmigen Gegenständen (10), und ferner durch eine Vorrichtung zur Relativverschiebung der plattenförmigen Gegenstände (10) einerseits und des Warenträgers (3) mit Traggestellen anderseits zueinander derart, daß die plattenförmigen Gegenstände von Haltefedern der Traggestelle klemmend gehalten sind bzw. umgekehrt (Fig. 3).

9. Anordnung nach einem der Ansprüche 1 bis 8, dadurch gekennzeichnet, daß die in horizontaler Lage auf einem Transportband (39) befindlichen plattenförmigen Gegenstände entweder mit diesem Transportband oder mittels eines sie seitlich ergreifenden Rahmens (40) um 90° in eine senkrechte Position schwenkbar sind (Fig. 10, 10a).

10. Anordnung nach einem der Ansprüche 1 bis 9, gekennzeichnet durch eine automatisierte Steuerung der vorgenannten Bauelemente und Bewegungsabläufe.

11. Anordnung nach einem der Ansprüche 1 bis 10, dadurch gekennzeichnet, daß die unteren Enden eines Traggestelles, insbesondere die unteren Enden einer Anzahl nebeneinander befindlichen und in einer gemeinsamen Ebene angeordneten Traggestelle (19, 34) durch eine Versteifungsstange (41) miteinander verbunden und versteift sind.

12. Anordnung nach Anspruch 11, gekennzeichnet durch lösbare Verriegelungen oder Verklinkungen der Enden der Versteifungsstange (41).

13. Anordnung nach Anspruch 12, dadurch gekennzeichnet, daß die Versteifungsstange (41) an ihren Enden Einkerbungen (42) aufweist, in die je ein klinkenähnlicher Hebel (43) eingreifen kann bzw. wieder aus dieser Verklinkungslage herausschwenkbar ist.

14. Anordnung nach Anspruch 12 oder 13 dadurch gekennzeichnet, daß die Verriegelung oder Verklinkung die Versteifungsstange sowohl in ihrer Längsrichtung als auch in einer Richtung quer zur Ebene der Traggestelle fixiert.

15. Anordnung nach einem der Ansprüche 1 bis 14, gekennzeichnet durch Servomotoren für die Bewegung der Transport- und Beschickungseinrichtungen entlang des Warenträgers (3) und der daran hängenden Traggestelle (19, 34), wobei die Umdrehungszahlen der Servomotoren der jeweiligen Position entsprechen.

16. Anordnung nach einem der Ansprüche 1 bis 15, gekennzeichnet durch eine Traggestell-Anordnung mit einem mittleren Tragstab (47) und zwei äußeren um ihre Längsachse schwenkbaren Drehstäben (48; 48a, 48b), an denen Klemmhalterungen, bevorzugt Klemmfedern (52), befestigt sind.

17. Anordnung nach Anspruch 16, dadurch gekennzeichnet, daß die beiden Drehstäbe (48, 48a, 48b) an einander entgegengesetzten Seiten des Tragstabes (47) angeordnet sind, wobei die Mittellängsachsen der Drehstäbe mit der Mittellängsachse des Tragstabes fluchtend in einer gemeinsamen Ebene liegen.

18. Anordnung nach Anspruch 16 oder 17, gekennzeichnet, durch Widerlager (53) für die Anlage der plattenförmigen Gegenstände (10) bei Klemmhalterung durch die Klemm- bzw. Andruckfedern (52), wobei die plattenförmigen Gegenstände (10) in der eingeklemmten Lage mit den vorgenannten Mittellängsachsen fluchten.

19. Anordnung nach einem der Ansprüche 16 bis 18, gekennzeichnet durch Trag- und Führungsplatten (54), die in Längsrichtung der Traggestellanordnung in Abständen voneinander an dieser befestigt sind und Drehlager für die Drehstäbe (48) bilden.

20. Anordnung nach Anspruch 19, dadurch gekennzeichnet, daß die Trag- und Führungsplatten (54) zugleich als leitend an der Anordnung angebrachte stromführende Widerlager (53) ausgebildet sind.

21. Anordnung nach einem der Ansprüche 16 bis 20, gekennzeichnet durch zwei Betätigungshebel (51, 51'), die jeweils an einem der Drehstäbe (48) angebracht und so abgewinkelt sind, daß sie zu der dem jeweiligen Drehstab gegenüberliegenden Seite der Anordnung geführt sind und sich in der Bewegungsbann eines Druckstößels (49) der Beschickungseinrichtung (14, 14') befinden.

## Claims

1. Arrangement for the feeding of carrying frames into systems for the chemical treatment, more especially electrodeposition, of plate-shaped articles in baths, the plate-shaped articles being retained in a vertical position in the carrying frames and being horizontally mounted both prior to and subsequent to the treatment process, characterised by a loading and an unloading station (1, 1'), each having a separating device (8) for removing and depositing individual plate-shaped articles (10) from a stack, formed from said articles, onto a means for conveying the plate-shaped articles further, or respectively from such a means back to a stack (7, 7'), the means for further conveyance on the one hand including a first conveyor belt (9) for receiving the plate-shaped articles (10), which are to be deposited by the separating device (8), and on the other hand having a second conveyor belt (12), which is in alignment, at least vertically, with the first conveyor belt, and the length of which second conveyor belt is so dimensioned that a plurality of plate-shaped articles (10), e.g. three, have space thereon one behind the other, and in that the second conveyor belt (12), together with the plate-shaped articles (10), is configured to be pivotable from the horizontal into the vertical (or in the reverse direction), and also:
a) having means, in order to transfer the plate-shaped articles (10), which are in the vertical, to the carrying frames (19, 34), or respectively in order to remove such therefrom; or
b) having means, in order to transfer the plate-shaped articles (10), which are in the vertical, to a separate feeding means (14), which is simultaneously configured as a conveyor means for displacing the plate-shaped articles from the pivotal device (23, 27) to the respective carrying frame (19, 34), or respectively in order to remove such therefrom.

2. Arrangement according to claim 1, characterised by a lifting device (8), which picks-up the plate-shaped articles (10), e.g. by means of suction cups (8''), lifts them from the stack of plates (7) and conveys them laterally to the pivotal device (23, 27), deposits them thereon, or respectively effects this operation in the reverse direction.

3. Arrangement according to claim 1, characterised in that the second conveyor belt (12) has means, e.g. pneumatic suction cups (24), which securely retain the plate-shaped articles during the pivotal process until they are transferred to a carrying frame or to a feeding means, or respectively retain such from the removal therefrom until the pivotal process is terminated.

4. Arrangement according to claim 1, characterised by a storage table (26) for receiving one of the plate-shaped articles (10) and a device (27), which pivots the storage table from the horizontal position into the vertical position (or respectively in the reverse direction), a lifting device (8) depositing the respective plate-shaped article on the horizontal storage table, or respectively removing the treated, plate-shaped article from said table.

5. Arrangement according to claim 4, characterised in that the storage table (26) is pivotally mounted at (29) on a lever (28), which is preferably pivotable by pneumatic means (31), and is pivotally mounted on an additional, preferably pneumatic control (31') at a spacing from this first pivotal mounting (29) and is pivotable therewith relative to the first pivotal mounting (29), and in that the horizontal position and the vertical position of the storage table (26) are adjustable by controlling the two above-mentioned pivotal means (31, 31').

6. Arrangement according to one of claims 1 to 5, characterised in that grippers (14) are provided as a separate feeding means, and in that the plate-shaped articles (10), which assume a vertical position, are supplied to the gripper from the loading station (1) by a horizontal displacement either of the respective gripper or of the plate-shaped articles, or respectively are conversely removed from said gripper and supplied to the unloading station.

7. Arrangement according to one of claims 1 to 6, characterised in that the separate feeding means (14), in the preferred configuration as a conveyor means, is conveyable into the loading position in a slide-like manner by means of horizontally extending guide means (22) from the loading station (1) along the carrying frames (19, 34) suspended from the article carrier (3), in that, in this position, the plate-shaped articles (10) are mounted on the carrying frame by the feeding means, and in that, after the chemical treatment process, the conveying and feeding means (14) removes the treated, plate-shaped articles from the respective carrying frame and guides it along the article carrier (3) to the unloading station (1'), from which the plate-shaped articles are brought into the horizontal position, e.g. are placed on a stack (7') for storage.

8. Arrangement according to claim 1, characterised by means, which retain the plate-shaped articles (10) in a vertical position, and by a displaceability of the article carrier (3), having carrying frames (19, 34) suspended therefrom, into a position above this row of plate-shaped articles (10), and also by a device for the displacement of the plate-shaped articles (10), on the one hand, and of the article carrier (3) with carrying frames, on the other hand, relative to one another such that the plate-shaped articles are clampingly retained by retaining springs of the carrying frames, or vice versa (Fig. 3).

9. Arrangement according to one of claims 1 to 8, characterised in that the plate-shaped articles, situated in a horizontal position on a conveyor belt (39), are pivotable through 90° into a vertical position either with this conveyor belt or by means of a frame (40), which grips them laterally (Figs. 10, 10a).

10. Arrangement according to one of claims 1 to 9, characterised by an automated control for the above-mentioned component parts and displacement steps.

11. Arrangement according to one of claims 1 to 10, characterised in that the lower ends of a carrying frame, more especially the lower ends of a number of carrying frames (19, 34), which are situated adjacent one another and disposed in a common plane, are interconnected and reinforced by a reinforcing rod (41).

12. Arrangement according to claim 11, characterised by detachable locking mechanisms or latches for the ends of the reinforcing rod (41).

13. Arrangement according to claim 12, characterised in that the reinforcing rod (41) has notches (42) at its ends, a pawl-like lever (43) being engageable in each of said notches or respectively being pivotable out of this interlocking position again.

14. Arrangement according to claim 12 or 13, characterised in that the locking mechanism or latch secures the reinforcing rod both in its longitudinal direction and in a transverse direction relative to the plane of the carrying frames.

15. Arrangement according to one of claims 1 to 14, characterised by servomotors for the displacement of the conveying and feeding means along the article carrier (3) and the carrying frames (19, 34) suspended therefrom, the numbers of revolutions of the servomotors corresponding to the respective position.

16. Arrangement according to one of claims 1 to 15, characterised by a carrying frame arrangement having a central supporting bar (47) and two external torsion bars (48; 48a, 48b), which are pivotable about their longitudinal axis and on which are secured clamping holders, preferably clamping springs (52).

17. Arrangement according to claim 16, characterised in that the two torsion bars (48, 48a, 48b) are disposed on sides of the supporting bar (47) situated opposite one another, the central longitudinal axes of the torsion bars lying in alignment with the central longitundinal axis of the supporting bar in a common plane.

18. Arrangement according to claim 16 or 17, characterised by supports (53) for the abutment of the plate-shaped articles (10) when being clampingly retained by the clamping or pressure springs (52), the plate-shaped articles (10) being in alignment with the above-mentioned central longitudinal axes in the clamped position.

19. Arrangement according to one of claims 16 to 18, characterised by support and guide plates (54), which are mounted on the carrying frame arrangement at spacings from one another, when viewed with respect to the longitudinal direction of said carrying frame arrangement, and form pivot bearings for the torsion bars (48).

20. Arrangement according to claim 19, characterised in that the support and guide plates (54) are simultaneously configured as current-conducting supports (53), which are conductively mounted on the arrangement.

21. Arrangement according to one of claims 16 to 20, characterised by two actuating levers (51, 51'), which are each mounted on one of the torsion bars (48) and so angled that they extend to the side of the arrangement opposite the respective torsion bar and are situated in the displacement path of a push-rod (49) of the feeding means (14, 14').

## Revendications

1. Dispositif de mise en place de structures de support dans des installations de traitement chimique, en particulier de galvanisation, d'objets en forme de plaques dans des bains, les objets en forme de plaques étant maintenus en position verticale dans les structures de support et étant supportés à l'horizontale avant de même qu'après le traitement,
caractérisé par une station de chargement et une station de déchargement (1, 1') comportant chacune un dispositif de séparation (8) pour prendre et déposer des objets (10) en forme de plaques isolés d'une pile constituée de ceux-ci sur un dispositif de transport des objets en forme de plaques ou d'un dispositif de ce type pour les replacer sur une pile (7, 7'), le dispositif de transport comprenant d'une part une première bande transporteuse (9) pour recevoir les objets (10) en forme de plaques devant être déposés par le dispositif de séparation (8) et présentant d'autre part une deuxième bande transporteuse (12), qui est alignée au moins en hauteur avec la première bande transporteuse et dont la longueur est dimensionnée de manière telle, que plusieurs, par exemple trois objets (10) en forme de plaques y prennent place l'un derrière l'autre, et que la deuxième bande transporteuse (12) avec les objets (10) en forme de plaques est capable de pivoter de l'horizontale à la verticale (ou inversement) et en comportant en outre :
a) des moyens destinés à transférer les objets (10) en forme de plaques se trouvant en position verticale sur les structures de support (19, 34) ou à les prélever de celles-ci ;
ou
b) des moyens, destinés à transférer les objets (10) en forme de plaques se trouvant en position verticale sur un dispositif d'alimentation (14) séparé, qui est également conformé en tant que dispositif de transport destiné à déplacer les objets en forme de plaques du dispositif de pivotement (23, 27) vers la structure de support (19, 34) considérée, ou à les prélever de celui-ci.

2. Dispositif selon la revendication 1, caractérisé par un dispositif de levage (8), qui saisit les objets (10) en forme de plaques, par exemple au moyen de ventouses (a''), les soulève de la pile de plaques (7) et les transporte latéralement vers le dispositif de pivotement (23, 27), les dépose sur celui-ci, ou exécute ces opérations en sens inverse.

3. Dispositif selon la revendication 1, caractérisé en ce que la deuxième bande transporteuse (12) présente des moyens, par exemple des ventouses pneumatiques (24), qui maintiennent les objets (10) en forme de plaques pendant l'opération de pivotement jusqu'au transfert sur une structure de support ou un dispositif d'alimentation ou de prélèvement à partir de celui-ci jusqu'à l'achèvement de l'opération de pivotement.

4. Dispositif selon la revendication 1, caractérisé par une table de rangement (26) destinée à recevoir l'un des objets (10) en forme de plaques et un dispositif de pivotement (27) qui fait pivoter la table de rangement de la position horizontale dans la position verticale (ou inversement), un dispositif de levage (6) déposant ledit objet en forme de plaque sur la table de rangement horizontale ou soulevant de celle-ci, l'objet en forme de plaque traité.

5. Dispositif selon la revendication 4, caractérisé en ce que la table de rangement (26) est articulée (29) sur un levier (28) pivotant de préférence pneumatiquement (31) et est articulée à distance de cette première articulation (29) sur un autre organe d'actionnement (31') de préférence pneumatique et est ainsi capable de pivoter par rapport à la première articulation et en ce que les positions horizontale et verticale de la table de rangement (26) sont réglables grâce à la commande des deux moyens de pivotement (31, 31') susmentionnés.

6. Dispositif selon l'une quelconque des revendications 1 à 5, caractérisé en ce que des crochets (14) sont prévus en tant que dispositif d'alimentation séparé et en ce que par déplacement horizontal soit de chaque crochet soit de chaque objet en forme de plaque, les objets (10) en forme de plaques adoptant une position verticale sont soit amenés la station de chargement (1) vers le crochet considéré soit inversement retirés dudit crochet et acheminés vers la station de déchargement.

7. Dispositif selon l'une quelconque des revendications 1 à 6, caractérisé en ce que le dispositif d'alimentation séparé (14), dans le mode de réalisation préféré en tant que dispositif de transport, peut être transporté à la manière d'un traîneau au moyen d'éléments de guidage (22) depuis la station de chargement (1), le long des structures de support (19, 34) suspendues au support d'objets (3) dans la position de chargement, en ce que dans cette position, les objets (10) en forme de plaques sont placés du dispositif d'alimentation sur la structure de support, et en ce qu'après le traitement chimique, le dispositif de transport et d'alimentation (14) retire les objets en forme de plaques de la structure de support considérée et les achemine le long du support d'objets (3) vers la station de déchargement (1'), à partir de laquelle les objets en forme de plaques sont déposés en position horizontale, par exemple sur une pile de stockage (7').

8. Dispositif selon la revendication 1, caractérisé par des moyens, qui maintiennent les objets (10) en forme de plaques dans une position verticale, par une possibilité de translation du support d'objets (3), des structures de support (19, 34) étant suspendues à celui-ci, dans une position au-dessus de cette série d'objets (10) en forme de plaques, ainsi que par un dispositif destiné au déplacement relatif des objets (10) en forme de plaques d'une part et du support d'objets (3) avec les structures de support d'autre part, les uns par rapport aux autres, de manière telle que les objets en forme de plaques sont maintenus, par serrage, par des ressorts de maintien des structures de support, ou inversement (figure 3).

9. Dispositif selon l'une quelconque des revendications 1 à 8, caractérisé en ce que les objets en forme de plaques situés en position horizontale sur une bande transporteuse (39) peuvent pivoter sur 90°, dans une position verticale, soit avec cette bande transporteuse soit au moyen d'un cadre (40) qui vient en prise latéralement avec lesdits objets (figure 10, 10a).

10. Dispositif selon l'une quelconque des revendications 1 à 9, caractérisé par une commande automatisée des éléments et des trajectoires susmentionnés.

11. Dispositif selon l'une quelconque des revendications 1 à 10, caractérisé en ce que les extrémités inférieures d'une structure de support, en particulier les extrémités inférieures d'une pluralité de structures de support (19, 34) adjacentes les unes aux autres et situées dans le même plan, sont reliées les unes aux autres et raidis par une barre de raidissement (41).

12. Dispositif selon la revendication 11, caractérisé par des verrouillages ou des encliquetages amovibles des extrémités de la barre de raidissement (41).

13. Dispositif selon la revendication 12, caractérisé en ce que la barre de raidissement (41) présente à ses extrémités des rainures dans chacune desquelles un levier (43) du type d'un cliquet peut venir en prise, ou pivoter pour se dégager à nouveau de celles-ci.

14. Dispositif selon l'une quelconque des revendications 12 ou 13, caractérisé en ce que le verrouillage ou encliquetage fixe la barre de raidissement aussi bien dans son sens longitudinal que dans un sens perpendiculaire au plan des structures de support.

15. Dispositif selon l'une quelconque des revendications 1 à 14, caractérisé par des servomoteurs destinés au déplacement des dispositifs de transport et d'alimentation le long du support d'objets (3) et des structures de supports (19,34) qui y sont suspendues, la vitesse de rotation des servomoteurs correspondant à la position considérée.

16. Dispositif selon l'une quelconque des revendications 1 à 15, caractérisé par un dispositif à structures de support comportant une barre de support centrale (47) et deux barres rotatives extérieures (46 ; 48a, 48b) capables de pivoter selon leurs axes longitudinaux, sur lesquelles sont fixés des fixations par serrage, de préférence des ressorts de serrage (52).

17. Dispositif selon la revendication 16, caractérisé en ce que les deux barres rotatives (48 ; 48a, 48b) sont disposées sur des côtés opposés de la barre de support (47), les axes longitudinaux centraux des barres rotatives étant alignés dans un même plan par rapport l'axe longitudinal central de la barre de support.

18. Dispositif selon l'une quelconque des revendications 16 ou 17, caractérisé par des butées (53) pour l'appui des objets (10) en forme de plaques lorsque ceux-ci sont retenus par serrage par les ressorts de serrage ou de pression (52), les objets (10) en forme de plaques étant alignés dans la position de serrage sur les axes longitudinaux centraux susmentionnés.

19. Dispositif selon l'une quelconque des revendications 16 à 18, caractérisé par des plaques de support et de guidage (54), qui sont fixées sur le dispositif à structures de support, dans le sens longitudinal de celui-ci, à distance les unes des autres et constituent des paliers pour les barres rotatives (48).

20. Dispositif selon la revendication 19, caractérisé en ce que les plaques de support et de guidage (54) sont également conformées comme des butées (53) conductrices d'électricité, montées en tant que conducteurs sur le dispositif.

21. Dispositif selon l'une quelconque des revendications 16 à 20, caractérisé par deux leviers d'actionnement (51, 51'), qui sont chacun monté sur une barre rotative (48) et sont coudés de manière telle qu'ils sont orientés vers la barre rotative de l'autre côté du dispositif et se situent sur la trajectoire de déplacement d'un coulisseau de pression (49) du dispositif d'alimentation (14, 14').
